# EUROPEAN PATENT SPECIFICATION

(11) **EP 3 957 678 B1**
(45) Date of publication and mention of the grant of the patent: **13.12.2023**
(21) Application number: 20810411.7
(22) Date of filing: 30.04.2020
(51) Int. Cl.: C08G 77/60, C08G 77/26, C09D 183/08, C09D 183/16, C09D 183/14

(54) **SILICON-CONTAINING POLYMER, FILM-FORMING COMPOSITION, METHOD FOR SUPPORTING METAL COMPOUND ON SURFACE OF OBJECT TO BE TREATED, ARTICLE HAVING METAL COMPOUND-SUPPORTING COATING FILM, AND METHOD FOR PRODUCING SILICON-CONTAINING POLYMER**
SILICIUMHALTIGES POLYMER, FILMBILDENDE ZUSAMMENSETZUNG, VERFAHREN ZUR UNTERSTÜTZUNG DER METALLVERBINDUNG AUF DER OBERFLÄCHE EINES ZU BEHANDELNDEN GEGENSTANDES, GEGENSTAND MIT EINER METALLVERBUNDBESCHICHTUNG UND VERFAHREN ZUR HERSTELLUNG VON SILICIUMHALTIGEM POLYMER
POLYMÈRE CONTENANT DU SILICIUM, COMPOSITION FILMOGÈNE, PROCÉDÉ PERMETTANT DE SUPPORTER UN COMPOSÉ MÉTALLIQUE SUR LA SURFACE D'UN OBJET À TRAITER, ARTICLE COMPORTANT UN FILM DE REVÊTEMENT DE SUPPORT DE COMPOSÉ MÉTALLIQUE ET PROCÉDÉ DE PRODUCTION D'UN POLYMÈRE CONTENANT DU SILICIUM

(30) Priority: 17.05.2019 JP 2019093797
(43) Date of publication of application: 23.02.2022
(73) Proprietor: Tokyo Ohka Kogyo Co., Ltd., Kawasaki-shi, Kanagawa 211-0012 (JP)
(72) Inventor: NODA Kunihiro, Kawasaki-shi, Kanagawa 211-0012 (JP); YAMANOUCHI Atsushi, Kawasaki-shi, Kanagawa 211-0012 (JP); SESHIMO Takehiro, Kawasaki-shi, Kanagawa 211-0012 (JP); SHIOTA Dai, Kawasaki-shi, Kanagawa 211-0012 (JP)
(74) Representative: Plasseraud IP
(86) International application number: PCT/JP2020/018336
(87) International publication number: WO 2020/235325

(56) References cited:
- EP-A1- 3 543 304
- WO-A1-98/30618
- CN-B- 103 122 008
- JP-A- H06 122 767
- JP-A- H06 122 767
- JP-A- H08 304 371
- JP-A- H09 110 993
- JP-A- H09 110 993
- JP-A- 2005 226 162
- JP-A- 2006 307 084
- JP-A- 2007 513 347
- JP-A- 2009 214 056
- JP-A- 2010 043 377
- JP-A- 2010 043 377
- JP-A- 2011 180 364
- JP-A- 2017 160 340
- JP-B2- 3 031 745
- US-A1- 2007 178 600
- MA ET AL: "Synthesis and investigation of the properties of poly(methyl-@b-cyanoethylsilylene)-methylp henylsilylene", MATERIALS LETTERS, ELSEVIER, AMSTERDAM, NL, vol. 61, no. 19-20, 22 June 2007 (2007-06-22), pages 4163-4165, XP022130075, ISSN: 0167-577X
- MA Nian-fang, SUN Zheng-guang, LIAO Yi-jun, HUANG Shi-qiang: "Synthesis and properties studies of polysilane containing -cyanoethyl side group", Silicone Material, vol. 21, no. 4, 25 July 2007 (2007-07-25), pages 189-192+246, XP055865641, ISSN: 1009-4369
- MA, NIANFANG et al.: "Synthesis and investigation of the properties of poly (methyl-beta- cyanoethylsilylene)-methylphenylsilylene", Materials Letters, vol. 61, no. 19-20, 2007, pages 4163-4165, XP022130075, ISSN: 0167-577X

## Description

### TECHNICAL FIELD

The present invention relates to a silicon-containing polymer; a film-forming composition including the silicon-containing polymer;
a method for supporting a metal compound on a surface of an object to be treated by forming a coating film on the surface of the object to be treated using the film-forming composition and bringing the coating film into contact with a metal compound;
an article having a coating film that includes the silicon-containing polymer and supports a metal compound; and a method for producing the silicon-containing polymer.

### BACKGROUND ART

It is widely known that metal compounds containing various elemental metals have functions as catalysts and functions to adjust various physical properties such as optical properties and electrical conductivity. For this reason, metal compounds may be used not only as substrates, but also as a thin coating on the surface of various articles, in some cases.

With respect to formation of a coating film containing a metal compound, for example, as a pretreatment for forming a diamond-like carbon film, a method is known in which a solution containing one or two or more metal compounds selected from a metal compound containing Ni, a metal compound containing Co, and a metal compound containing Fe is applied to the surface of a substrate comprising Si (See Patent Document 1.).

Patent Document 1: Japanese Patent No. 5002803

### DISCLOSURE OF THE INVENTION

### Problems to be Solved by the Invention

However, when an aqueous solution of a metal compound is directly applied to the surface of a substrate, as in the method described in Patent Document 1, there is a problem that the metal compound cannot be stably retained on the surface of the substrate or that the amount of the metal compound retained on the surface of the substrate tends to be uneven.

Such a problem can be solved if a coating film capable of supporting a metal compound can be formed on the substrate surface. Generally, to form a coating film, a coating solution containing a polymer is often used. As a chemically stable polymer, silicon-containing polymers such as polysiloxane and polysilane are known.

Under these circumstances, there is a need for a new silicon-containing polymer capable of supporting a metal compound for the purpose of forming a coating film capable of supporting a metal compound containing an elemental metal.

The present invention has been made in view of the above-described problem, and an object of the present invention is to provide a new silicon-containing polymer capable of supporting a metal compound including an elemental metal, a film-forming composition including the silicon-containing polymer;
a method for supporting a metal compound on a surface of an object to be treated by forming a coating film on the surface of the object to be treated using the film-forming composition and bringing the coating film into contact with a metal compound, and bringing the coating film into contact with a metal compound;
an article having a coating film that includes the silicon-containing polymer and supports a metal compound; and a method for producing the silicon-containing polymer.

### Means for Solving the Problems

The present inventors have found that the above problem can be solved by introducing a hydrocarbon group having 2 or more and 8 or less carbon atoms with a cyano group on a silicon atom in a silicon containing polymer consisting of a polysilane chain or an oligosilane chain and the present invention was completed. More specifically, the present invention provides the following

A first aspect of the present invention relates to a silicon-containing polymer consisting of a poly-silane chain or oligo-silane chain, in which one or more groups represented by the following formula (1) are bound onto a silicon atom in the silicon-containing polymer; in which the formula (1) is represented by a following formula:

-R¹-CN • • • (1),

and
in which, in the formula (1), R¹ is a hydrocarbon group having 2 or more and 8 or less carbon atoms, wherein the silicon-containing polymer is further as defined in claim 1.

A second aspect of the present invention relates to a film-forming composition including the silicon-containing polymer (A) as described in the first aspect and a solvent (S) .

A third aspect of the present invention relates to a method for supporting a metal compound on a surface of an object to be treated,
the method including:
forming a coated film by applying the film-forming composition as described in the second aspect onto a surface of the object to be treated,
drying the coated film to obtain a coating film including the silicon-containing polymer (A), and
bringing the coating film into contact with a metal compound including an elemental metal.

A fourth aspect of the present invention relates to an article having a coating film on a surface thereof, in which the coating film includes the silicon-containing polymer (A) as described in the first aspect, and the coating film supports a metal compound including an elemental metal.

A fifth aspect of the present invention relates to a method for producing a polysilane as disclosed in claim 10.

### Effects of the Invention

According to the present invention, there can be provided a new silicon-containing polymer capable of supporting a metal compound including an elemental metal; a film-forming composition including the silicon-containing polymer;
a method for supporting a metal compound on a surface of an object to be treated, the method including forming the coating film on the surface of the object to be treated using the film-forming composition, and bringing the coating film into contact with a metal compound;
an article having a coating film that includes the silicon-containing polymer and supports a metal compound; and a method for producing the silicon-containing polymer.

### PREFERRED MODE FOR CARRYING OUT THE INVENTION

### <<Silicon-containing polymer>>

The silicon-containing polymer consists of a poly-silane chain or oligo-silane chain in a molecular chain. In the silicon-containing polymer, one or more groups represented by the following formula (1) are bound onto a silicon atom. The formula (1) is presented by the following formula:

-R¹-CN . (1) .

In the formula (1), R¹ is a hydrocarbon group having 2 or more and 8 or less carbon atoms.

The silicon-containing polymer has a group represented by the formula (1). Thereby, by forming a film that contains a silicon-containing polymer on the surface of the object to be treated, a metal compound containing various metal elements can be supported on the surface of the object to be treated.

Due to the ease of producing a silicon-containing polymer and the ease of their utilizing properties as polysilane the molecular chain of the silicon-containing polymer consists of only the poly-silane chain or the oligo-silane chain.

The structure of the molecular chain of a silicon-containing polymer is not particularly limited. The structure of the molecular chain may have a linear structure, a branched chain structure, a network structure, or a cyclic structure. Due to the ease of controlling the molecular weights and adjusting various physical properties of a silicon-containing polymer, the structure of the molecular chain of a silicon-containing polymer is preferably linear. It should be noted that the silicon-containing polymer may be combined with a molecule having a different molecular chain structure. The silicon-containing polymer may include, for example, a combination of a linear molecule and a branched molecule.

The poly-silane chain or oligo-silane chain will now be described.

### <Poly-silane chain or oligo-silane chain>

The structure of poly-silane chain or oligo-silane chain in a silicon-containing polymer is not particularly limited, so long as the silicon-containing polymer has a group represented by the above formula (1). The poly-silane chain or oligo-silane chain may include a silanol group and/or an alkoxy group. The poly-silane chain or oligo-silane chain is composed of at least one of units represented by the following formulae (A5) to (A7): 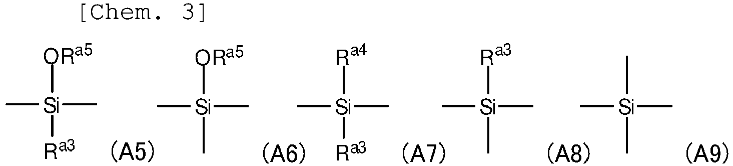 (In the formulae (A5), (A7), R^{a3} and R^{a4} each represent a hydrogen atom, an organic group, or a silyl group. R^{a5} represents a hydrogen atom or an alkyl group. When R^{a5} is an alkyl group, an alkyl group having 1 or more and 4 or less carbon atoms is preferable, a methyl group and an ethyl group are more preferable.).

The organic groups as R^{a3} and R^{a4} is a group represented by the above-described formula (1), an alkyl group, an alkenyl group, a cycloalkyl group, a cycloalkenyl group, and an aralkyl group, an alkoxy group, an alkenyloxy group, a cycloalkoxy group, a cycloalkenyloxy group, an aryloxy group, and an aralkyloxy group, and the like. Among these groups, a group represented by the above-described formula (1), an alkyl group, and an aralkyl group are preferable.

When R^{a3} and R^{a4} are each a silyl group, examples of the silyl group include a silyl group and Si₁₋₁₀ silanyl groups (such as Si₁₋₆ silanyl groups) such as a disilanyl group and a trisilanyl group. The poly-silane chain or oligo-silane chain preferably includes units of the following formulae (A10) to (A13) .

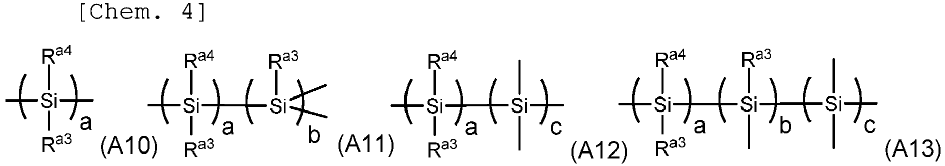

In (A10) to (A13), R^{a3} and R^{a4} are the same as R^{a3} and R^{a4} in the formulae (A5) and (A7). Each of a, b, and c is an integer of 2 to 1000. Each of a, b, and c is preferably 10 to 500, more preferably 10 to 100. The building block in each unit may be present in the unit either in a random manner or in a blocked state.

Among the poly-silane chain or oligo-silane chains described above, poly-silane chain or oligo-silane chain including a combination of a group represented by the formula (1), an alkyl group, and an aralkyl group, each bound to a silicon atom, and poly-silane chain or oligo-silane chain including a combination of a group represented by the formula (1) and an alkyl group, each bound to a silicon atom, are preferable.

More specifically, poly-silane chain or oligo-silane chain including a combination of a group represented by the formula (1) and a methyl group, each bound to a silicon atom, and poly-silane chain or oligo-silane chain including only groups represented by the formula (1), each bound to a silicon atom, are preferably used.

### <Group represented by formula (1)>

The silicon-containing polymer has a group represented by the formula (1) and thereby can support a metal compound including various elemental metals.

The number of moles of a group represented by the formula (1) in the silicon-containing polymer is preferably 0.05 mol or more and 2.0 mol or less and more preferably 0.2 mol or more and 1.0 mol or less with respect to 1 mol of silicon atom in the silicon-containing polymer because the silicon-containing polymer easily supports a metal compound in a satisfactory manner.

The alkylene group as R¹ in the above formula (1) is not particularly limited, so long as the number of carbon atoms is 2 or more and8 or less.

A linear alkylene group having 2 or more and 6 or less carbon atoms is the most preferable.

Specific examples of the hydrocarbon groups as R¹ include a methylene group, an ethane-1,2-diyl group, an ethane-1,1-diyl group, a propane-1,3-diyl group, a propane-1,2-diyl group, a propane-1,1-diyl group, a butane-1,4-diyl group, a pentane-1,5-diyl group, a hexane-1,6-diyl group, a heptane-1,7-diyl group, an octane-1,8-diyl group, a nonane-1,9-diyl group, a decane-1,10-diyl group, a cyclohexane-1,4-diyl group, a cyclohexane-1,3-diyl group, a cyclohexane-1,2-diyl group, and the like.

Among the above hydrocarbon groups as R¹, an ethane-1,2-diyl group, a propane-1,3-diyl group, a p-phenylene group, and a m-phenylene group are preferable, and an ethane-1,2-diyl group, and a propane-1,3-diyl group are more preferable.

As the group represented by the formula (1), a 2-cyanoethyl group, a 3-cyano-n-propyl group, a 4-cyano-n-butyl group, a 5-cyano-n-pentyl group, and a 6-cyano-n-pentyl group are preferable, and a 2-cyanoethyl group, a 3-cyano-n-propyl group, and a 4-cyano-n-butyl group are more preferred.

The weight average molecular weight (Mw) of a silicon-containing polymer described above, and the dispersion degree (Mw/Mn), the ratio of weight average molecular weight (Mw) and number average molecular weight (Mn), are not particularly limited. The weight average molecular weight is preferably 500 or more and 12000 or less, more preferably 700 or more and 8000 or less, and further preferably 700 or more and 3000 or less from the viewpoint of solubility in the film-forming composition or film forming properties. The dispersion degree is preferably 1 or more and 4.5 or less, and more preferably 2 or more and 4 or less.

### <<Film-forming composition>>

The film-forming composition includes the above-described silicon-containing polymer (A) and a solvent (S). By applying such a film-forming composition, a coating film including the silicon-containing polymer (A) as the main component can be formed. As is described below, by forming a coating film including the silicon-containing polymer (A) as the main component on surfaces of various articles to be treated, it is possible to provide the articles to be treated with metal supporting ability.

### <Silicon-containing polymer (A)>

The silicon-containing polymer (A) is as described above. The silicon-containing polymer (A) content in the film-forming composition is not particularly limited and may be set depending on the desired film thickness. From the viewpoint of film-forming properties, the silicon-containing polymer (A) content in the film-forming composition is preferably 1 % by mass or more and 50 % by mass or less, more preferably 5 % by mass or more and 40 % by mass or less, and particularly preferably 10 % by mass or more and 35 % by mass or less.

### <Solvent (S)>

The film-forming composition includes a solvent (S). The solvent (S) is not particularly limited, so long as the silicon-containing polymer (A) is soluble in it.

Suitable examples of the solvent (S) include
alcohols such as methanol, ethanol, propanol, and n-butanol; polyhydric alcohols such as ethylene glycol, diethylene glycol, propylene glycol, and dipropylene glycol;
ketones such as acetone, methyl ethyl ketone, cyclohexanone, methyl-n-amyl ketone, methyl isoamyl ketone, and 2-heptanone; lactone-ring-containing organic solvents such as γ-butyrolactone;
polyhydric alcohol derivatives, including ester-bond-containing compounds such as ethylene glycol monoacetate, diethylene glycol monoacetate, propylene glycol monoacetate, and dipropylene glycol monoacetate, and ether-bond-containing compounds such as monoalkyl ethers, for example, monomethyl ether, monoethyl ether, monopropyl ether, and monobutyl ether, or monophenyl ethers of the above polyhydric alcohols or the above ester-bond-containing compounds, and the like;
cyclic ethers such as dioxane and esters such as methyl lactate, ethyl lactate, methyl acetate, ethyl acetate, butyl acetate, methyl pyruvate, ethyl pyruvate, methyl methoxypropionate, and ethyl ethoxypropionate;
aromatic organic solvents such as anisole, ethyl benzyl ether, cresyl methyl ether, diphenyl ether, dibenzyl ether, phenetole, butyl phenyl ether, ethylbenzene, diethylbenzene, amylbenzene, isopropylbenzene, toluene, xylene, cymene, and mesitylene; and nitrogen-containing organic solvents such as N,N,N',N'-tetramethylurea, N,N,2-trimethylpropionamide, N,N-dimethylacetamide, N,N-dimethylformamide, N,N-diethylacetamide, N,N-diethylformamide, 1,3-dimethyl-2-imidazolidinone, N-methylpyrrolidone, and N-ethylpyrrolidone. Two or more of these solvents may be used in combination.

Among these solvents, propylene glycol monomethyl ether acetate (PGMEA), propylene glycol monomethyl ether (PGME), N,N,N',N'-tetramethylurea, and butanol are preferable.

It is also preferred that the solvent (S) include a cycloalkyl acetate represented by the following formula (S1). The film-forming composition includes a solvent (S) including a cycloalkyl acetate represented by the following formula (S1) together with the silicon-containing resin (A), thereby the coating film formed using the film-forming composition has good heat resistance. 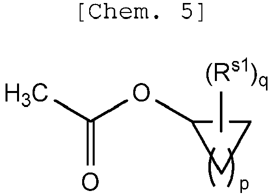 (In the formula (S1), R^{S1} is an alkyl group having 1 or more and 3 or less carbon atoms, p is an integer of 1 or more and 6 or less, and q is an integer of 0 or more and (p + 1) or less.).

Specific examples of the cycloalkyl acetate represented by the formula (S1) include cyclopropyl acetate, cyclobutyl acetate, cyclopentyl acetate, cyclohexyl acetate, cycloheptyl acetate, and cyclooctyl acetate. Among these, cyclohexyl acetate and cyclooctyl acetate are preferable because acquisition thereof is easy, and a coating film having excellent heat resistance can be easily formed. Two or more cycloalkyl acetates represented by the formula (S1) may be combined as the solvent (S).

The content of the cycloalkyl acetate represented by the formula (S1) in the solvent (S) is not particularly limited, so long as the object of the present invention is not defeated. The content of the cycloalkyl acetate represented by the formula (S1) in the solvent (S) is typically, for example, 30 % by mass or more, preferably 50 % by mass or more, more preferably 70 % by mass or more, and particularly preferably 90 % by mass or more, and it may be 100 % by mass.

The amount of the solvent (S) to be used is not particularly limited, so long as the object of the present invention is not defeated. From the viewpoint of film-forming properties, the solvent (S) is used so that the solid content concentration in the film-forming composition is preferably 1 % by mass or more and 50 % by mass or less and more preferably 10 % by mass or more and 40 % by mass or less.

### <Other components>

The film-forming composition may contain, in addition to the silicon-containing polymer (A) and the solvent (S), various components that are conventionally added to film-forming compositions used in various applications. Examples of other components include a photopolymerization initiator, an acid generator, a base generator, a catalyst, a silane coupling agent, an adhesion promoter, a dispersant, a surfactant, an ultraviolet absorber, an antioxidant, a defoaming agent, a viscosity modifier, a colorant, and the like. These components are blended, each in a typical amount, into the film-forming composition.

### <Method for producing film-forming composition>

The method for producing the film-forming composition is not particularly limited. A typical method is to uniformly mix the components described above each in a predetermined amount and dissolve the solid matter in the solvent (S) to produce the film-forming composition. For removal of very small insoluble matter, the film-forming composition may be filtered through a filter with a desired pore size.

### <<Method for supporting a metal compound on surface of object to be treated>>

A method for supporting a metal compound on a surface of an object to be treated includes:
forming a coated film by applying the film-forming composition onto the surface of the object to be treated,
drying the coated film to obtain the coating film including the silicon-containing polymer (A), and
bringing the coating film into contact with a metal compound including an elemental metal. According to the method described above, by bringing a coating film mainly including the silicon-containing polymer (A) having a group represented by the formula (1) formed on the surface of an object to be treated into contact with a metal compound containing an elemental metal, the surface of the object to be treated can support the metal compound.

The method for forming a coated film on the surface of the object to be treated is not particularly limited. For example, the film-forming composition is applied by a method such as a spraying method, a spin coating method, a roll coating method, a dipping method, or a drip method to form a coated film on a substrate. The thickness of the coated film is not particularly limited. Typically, the coated film is formed in a thickness such that a coating film with a thickness of preferably 0.1 nm or more and 20 um or less, more preferably 0.5 nm or more and 1000 nm or less, further preferably 0.5 nm or more and 500 nm or less, and particularly preferably 1 nm or more and 100 nm or less can be formed.

Objects to be treated include various substrates; porous materials for supporting catalytic compounds; housings for various devices; exterior materials for transportation vehicles such as automobiles, motorcycles, tricycles, railroad cars, ships, aircrafts, and helicopters; exterior materials for buildings; glass for buildings; mirrors; exhaust pipes for discharging exhaust gas generated by combustion from internal combustion engines, boilers, combustion furnaces for burning fossil fuels, and combustion furnaces for burning combustible wastes; various articles to be plated; substrates such as magnetic tapes, magnetic films, and magnetic sheets; optical materials such as lenses, high refractive index films, low refractive index films, prism sheets, and microlenses; ceramic capacitors, and multilayer ceramic capacitors; chemical apparatuses such as pipes, heat exchangers, storage tanks, reaction tanks, microreactors, and valves; LEDs; heat dissipation components such as heat sinks, and the like.

The material for the object to be treated is not particularly limited. Suitable examples of the material of the object to be treated include inorganic materials such as metal, silicon, and glass, polyester resins, polycarbonate resins, polyamide resins, polystyrene, polyethylene, polypropylene, acrylic resins, epoxy resins, polyarylene sulfide resins, polyimide resins, and polyamide-imide resins, and the like. The thickness of the substrate is not particularly limited, and the substrate may be a film or a sheet.

The coated film formed on the surface of the object to be treated in this manner is then dried. A method for drying the coated film includes air drying or a baking treatment in a temperature range of 60°C or more and 150°C or less. By the drying treatment, a coating film including the silicon-containing polymer (A) as a main component is formed.

The coating film is then brought into contact with a metal compound containing an elemental metal. A method for bringing the coating film into contact with the metal compound is not particularly limited. A preferred method is to contact a coating film with a solution of the metal compound, a liquid containing a colloid of the metal compound, or the like. The method for bringing the coating film into contact with a liquid containing the metal compound is not particularly limited. The method includes a method of applying a liquid containing the metal compound onto the coating film by a method similar to the method for forming the coated film, or a method of immersing an object to be treated having a coating film in a liquid containing the metal compound.

The concentration of the metal compound in the liquid containing the metal compound is not particularly limited as long as a desired amount of the metal compound can be supported on the surface of the object to be treated. For example, the concentration of the metal compound in the liquid containing the metal compound is preferably between 0.1 % by mass or more and 30 % by mass or less, more preferably 0.5 % by mass or more and 20 % by mass or less, and most preferably 1 % by mass or more and 10 % by mass or less.

The solvent or dispersant contained in the liquid containing the metal compound is not particularly limited as long as the metal compound is dissolved or dispersed in a colloidal form. The solvent or dispersant may be water, an organic solvent, or an aqueous solution of an organic solvent, and is preferably water. For the purpose of adjusting solubility and dispersibility of the metal compound, an acid such as hydrochloric acid, nitric acid, sulfuric acid, acetic acid, phosphoric acid, or the like, or a base such as sodium hydroxide, potassium hydroxide, sodium carbonate, potassium carbonate, sodium bicarbonate, potassium bicarbonate, or the like may be added to the liquid in which the metal compound is contained.

The type of the metal compound is not particularly limited and is selected as appropriate according to the properties to be imparted to the surface of the object to be treated. Some examples of the relationship between the properties imparted to the surface of the object to be treated and the metal elements contained in the metal compound are given below.
Photodegradation of organic matter: Ti
Decomposition treatment of exhaust gas: Pt, V, Rh
Pre-treatment for plating or imparting conductivity: Pd, Ni, Cu, Ag, Au
Magnetization: Fe, Co
Increase in refractive properties or increase in permittivity: Zr, Hf, Ba, Ti, Nb, La, Ce, Y
Imparting corrosion resistance: Ta
Imparting fluorescence: Zn
Imparting thermal conductivity: Al

The metal compound is not particularly limited to a metal compound that can be supported by the silicon-containing polymer (A). Examples of the metal compound include elemental metals, metal ions (salts such as carbonates, sulfates, phosphates, and halides (chlorides, bromides, etc.)), metal oxides, metal complex oxides, metal sulfides, and metal selenides. As for the complex oxide, it may contain metallic elements and semi-metallic elements such as Si, Ge, As, and Sb.

Preferred examples of the elemental metals contained in the metal compound include Na, Mg, Al, K, Ca, Ti, V, Cr, Mn, Fe, Co, Ni, Cu, Zn, Ga, Sr, Zr, Nb, Mo, Ru, Rh, Pd, Ag, Cd, In, Sn, Cs, Ba, Ta, W, Os, Ir, Pt, and Au.

Specific examples of the metal compound include titania (TiO₂), strontium titanate (SrTiO₃), zinc oxide (ZnO₂), tin oxide (SnO₂), cadmium selenide (CdSe), cadmium sulfide (CdS), tungsten oxide (WOs), potassium tantalate (KTaO₃), silica (SiO₂), tantalum oxide (Ta₂O₅), tantalum-based complex oxides (LiTaOs, NaTaOs, CaTa₂O₆, BaTa₂O₆, Sr₂Ta₂O₆), niobium-based complex oxides (K₄Nb₆O₁₇, Sr₂Nb₂O₇, Cs₂Nb₄O₁₁), zirconium oxide (ZrO₂), gallium-based oxide (ZnGa₂O₄), indium-based complex oxides (CaIn₂O₄, SrIn₂O₄), germanium-based oxides (Zn₄Ge₂O₄), antimony-based oxides (CaSb₂O₇, SrSb₂O₇), and vanadium-based oxides (V₂O₅). In addition, elemental metals, alloys, metal oxides, metal chlorides, metal carbonates, metal sulfates, and metal phosphates, including one or more elemental metals selected from the group consisting of Mg, Al, Ti, Cr, Mn, Fe, Co, Ni, Cu, Mo, Ru, Rh, Ag, W, Os, Ir, Pt, and Au, are also preferred as the metal compound.

After the coating film is contacted with a metal compound containing an elemental metal, the surface of the coating film may be cleaned with water or an organic solvent, if necessary. Through processes like these, a metal compound containing an elemental metal is supported on the surface of the object to be treated.

By the method described above, an article is produced which has a coating film which includes the aforementioned silicon-containing polymer and which supports a metal compound.

### <<Production method of silicon-containing polymer>>

Among methods for producing the silicon-containing polymer, a method for producing polysilane in which one or more groups represented by the formula (1) are bonded to a silicon atom will be described below. The method for producing such polysilane includes homo-polymerization of a cyano group-containing halosilane compound represented by a following formula (1a) in the presence of metallic magnesium or copolymerization of the aforementioned cyano group-containing halosilane compound with a halosilane compound other than the aforementioned cyano group-containing halosilane compound in the presence of metallic magnesium.

The formula (1a) is represented by the following formula:

R²₍₂₋ₚ₎X₂Si⁻(R¹⁻CN)ₚ • • • (1a).

In the formula (1a), X is a halogen atom, R¹ is the same as R¹ in the formula (1) above, R² is a hydrocarbon group having 1 or more and 10 or less carbon atoms, and p is 1 or 2.

As the hydrocarbon group as R², an alkyl group, an alkenyl group, a cycloalkyl group, a cycloalkenyl group, an aryl group, and an aralkyl group are preferable; and an alkyl group, an alkenyl group, a cycloalkyl group, a cycloalkenyl group or an aralkyl group are selected. An alkyl group, an aryl group, and an aralkyl group are preferred.

When R² is an alkyl group, an aryl group, or an aralkyl group, suitable examples of these groups are the same as the suitable examples when R in the formula (A1) is an alkyl group, an aryl group, or an aralkyl group.

As the halogen atom as X, chlorine and bromine are preferable, and chlorine is more preferable.

Suitable examples of cyano group-containing halosilane compounds represented by the formula (1a) include methyl(2-cyanoethyl)dichlorosilane, ethyl(2-cyanoethyl)dichlorosilane, n-propyl(2-cyanoethyl)dichlorosilane, isopropyl(2-cyanoethyl)dichlorosilane, phenyl(2-cyanoethyl)dichlorosilane, benzyl(2-cyanoethyl)dichlorosilane, methyl(3-cyano-n-propyl)dichlorosilane, ethyl(3-cyano-n-propyl)dichlorosilane, n-propy1(3-cyano-n-propyl)dichlorosilane, isopropyl (3-cyano-n-propyl)dichlorosilane, phenyl (3-cyano-n-propyl)dichlorosilane, benzyl(3-cyano-n-propyl)dichlorosilane, methyl(4-cyano-n-butyl)dichlorosilane, ethyl(4-cyano-n-butyl)dichlorosilane, n-propyl (4-cyano-n-butyl)dichlorosilane, isopropyl (4-cyano-n-butyl)dichlorosilane, phenyl(4-cyano-n-butyl)dichlorosilane, and benzyl(4-cyano-n-butyl)dichlorosilane.

The halosilane compound other than the cyano group-containing halosilane compound represented by the formula (1a) may be a dihalosilane compound, a trihalosilane compound, or a tetrahalosilane compound, and a dihalosilane compound is preferable. As a suitable example of the halosilane compound other than the cyano group-containing halosilane compound represented by the formula (1a), a dihalosilane compound represented by a following formula (2a) is preferable.

SiX₂R²₂ ... (2a).

In the formula (2a), X and R² are the same as X and R² in the formula (1a). Suitable examples of the dihalosilane compound represented by the formula (2a) include dimethyldichlorosilane, diethyldichlorosilane, di-n-propyldichlorosilane, diisopropyldichlorosilane, methylethyldichlorosilane, methylphenyldichlorosilane, methylbenzyldichlorosilane, diphenyldichlorosilane, phenylbenzyldichlorosilane, and dibenzyldichlorosilane.

An amount of the cyano group-containing halosilane compound represented by the formula (1a) relative to the total amount of the halosilane compound used in the production of the polysilane is not particularly limited, and can be decided as appropriate by taking into account the amount of the group represented by the formula (1) in the polysilane.

Metallic magnesium can be any component as long as it contains magnesium in the form of active metallic magnesium that is not in the form of magnesium ions or the like. Typically, metallic magnesium (elemental magnesium), magnesium alloys, and the like are used. The type of magnesium alloy is not particularly limited. For example, a magnesium alloy containing magnesium and one or more components selected from aluminum, zinc, and rare earth elements (scandium, yttrium, etc.) is mentioned. A metallic magnesium component that includes metallic magnesium can be used alone or in combination of two or more types.

The shape of the metallic magnesium component is not particularly limited as long as the reaction of the halosilane compound is not impaired. The shape of the metallic magnesium component includes powdered granular (powder, granular, etc.), ribbon, flake, rod, plate, etc., and the powdered granular is preferred. The average particle diameter of the powdered granular metallic magnesium component is, for example, preferably 1 um or more and 10000 um or less, more preferably 10 um or more and 7000 um or less, more preferably 15 um or more and 5000 um or less, and most preferably 20 um or more and 3000 um or less.

In some cases, a coating film (such as an oxide coating film) is formed on the surface of a metallic magnesium component. Such a coating film may have an adverse effect on the reaction. Therefore, when a coating film is formed on the surface of a metallic magnesium component, it is preferable to use the metallic magnesium component after removing the coating film by cutting, hydrochloric acid cleaning, or other methods.

The amount of the metallic magnesium component used is preferably, for example, 0.3 equivalents or more and 30 equivalents or less in magnesium equivalent with respect to the halogen atom in the total amount of the halosilane compound, more preferably 0.5 equivalents or more and 20 equivalents or less, and most preferably 1 equivalent or more and 15 equivalents or less.

The polymerization reaction of the halosilane compound should be carried out in the presence of at least a metallic magnesium component. In order to promote the polymerization of the halosilane compound, it is preferable to carry out the polymerization of the halosilane compound in the presence of the metallic magnesium component and a lithium compound.

Examples of lithium compounds include lithium halides such as lithium chloride, lithium bromide, and lithium iodide, and lithium salts of inorganic acids such as lithium nitrate, lithium carbonate, lithium bicarbonate, lithium hydrochloride, lithium sulfate, lithium perchlorate, and lithium phosphate. As the lithium compound, lithium halide is preferable, and lithium chloride is more preferable. These lithium compounds may be used alone or in combination of two or more types thereof.

As the used amount of the lithium compound, 0.1 part by mass or more and 200 parts by mass or less is preferable, 1 part by mass or more and 150 parts by mass or less is more preferable, and 2 parts by mass or more and 100 parts by mass or less is most preferable, with respect to 100 parts by mass of the halosilane compound.

As reaction solvents, aprotic solvents are preferably used. Preferred examples of the aprotic solvents include ethers such as 1,4-dioxane, tetrahydrofuran, tetrahydropyran, diethyl ether, diisopropyl ether, 1,2-dimethoxyethane, and bis(2-methoxyethyl) ether; carbonates such as propylene carbonate; nitriles such as acetonitrile and benzonitrile; amides such as N,N-dimethylformamide and N,N-dimethylacetamide; sulfoxides such as dimethyl sulfoxide; aromatic hydrocarbons such as benzene, toluene, and xylene; and aliphatic hydrocarbons such as hexane, cyclohexane, octane, and cyclooctane. These aprotic solvents may be used alone or in combination of two or more types thereof.

Halosilanes react rapidly with water. For this reason, it is preferable to use a reaction vessel and materials used in the reaction after they have been sufficiently dried (dehydrated) beforehand.

The temperature at which polymerization of halosilane compound is carried out is not particularly limited as long as the polymerization reaction proceeds well. The polymerization temperature is usually preferably -20°C or more and 150°C or less, more preferably 0°C or more and 100°C or less, and most preferably 10°C or more and 80°C or less. The time of the polymerization reaction is adjusted according to the type of the halosilane compound, the metal halide, and the amount of the metallic magnesium component. For example, polymerization reaction time of 5 minutes or more is preferable, 30 minutes or more and 100 hours or less is more preferable, 1 hour or more and 80 hours or less is more preferable, and 2 hours or more and 60 hours or less is most preferable.

### Examples

Below, the present will be described in more detail by reference to the Examples, but the present invention is not limited to these Examples.

### [Example 1]

### (Synthesis of methyl(3-cyano-n-propyl)silane polymer)

In a round-bottom flask equipped with a three-way cock with an inner volume of 1000 ml, 43.45 g of granular magnesium (grain diameter 20um or more and 1000 um or less), 5.26 g of tris(acetylacetonato)iron(III) as a catalyst, and 1.26 g of anhydrous lithium chloride were put. The atmosphere in the reactor was set to 50°C and the pressure therein was reduced to 1 mmHg (= 133 kPa) to dry the inside of the reactor (flask). After this, dry argon gas was introduced into the reactor, and 132.13 ml of tetrahydrofuran (THF) dried with sodium-benzophenone ketyl in advance was added to the reactor. Subsequently, the contents in the reactor were stirred at 25°C for about 60 minutes. Next, 54.64 g (0.3 mol) of methyl(3-cyano-n-propyl)dichlorosilane purified by distillation in advance was added to this reactor by a syringe and the reaction mixture in the reactor was stirred at 25°C for about 24 hours. After completion of the reaction, 1000 ml of 1 N (= 1 mol/L) hydrochloric acid was put in the reaction mixture, and a formed silane polymer was then extracted by 500 ml of toluene. The toluene phase was washed with 200 ml of pure water ten times, and the toluene phase was then dried over anhydrous magnesium sulfate. Subsequently, toluene was distilled off from the toluene phase to give 18.2 g of a linear methyl(3-cyano-n-propyl)silane polymer (mass average molecular weight (Mw) 4200).

### [Example 2]

The methyl(3-cyano-n-propyl)silane polymer obtained in Example 1 was dissolved in cyclohexanol acetate so that the solid content concentration was 10 % by mass to obtain a film-forming composition. On a silicon substrate (6 inches), the film-forming composition was spin-coated to form a coated film, and then the coated film was dried at 80°C for 120 seconds to form a coating film with a thickness of 80 nm. The silicon substrate having the coating film was immersed in a PdCl₂ hydrochloric acid-acidified aqueous solution containing 4 % by mass of PdCl₂, followed by immersion of the silicon substrate in ion-exchange distilled water for cleaning. The silicon substrate after cleaning was dried to obtain a silicon substrate having a coating film that supports PdCl₂. Analyzing the surface of the silicon substrate obtained and the surface of the untreated silicon substrate by XPS (X-ray photoelectron spectroscopy), a peak originating from PdCl₂ was observed for the silicon substrate obtained in Example 2, while no peak originating from PdCl₂ was observed on the surface of the untreated silicon substrate.

## Claims

1. A silicon-containing polymer, comprising a poly-silane chain or oligo-silane chain in a molecular chain,
**characterized in that** one or more groups represented by a following formula (1) are bound onto a silicon atom in the silicon-containing polymer;
wherein the formula (1) is represented by
-R¹-CN • • • (1),
wherein, in the formula (1), R¹ is an alkylene group having 2 or more and 8 or less carbon atoms, and
the poly-silane chain or oligo-silane chain is composed of at least one of units represented by the following formulae (A5) to (A7): 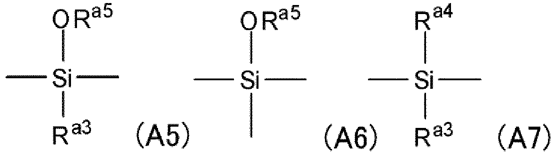 wherein, in the formulae, R^{a3} and R^{a4} each represent a hydrogen atom, a group represented by the formula (1), an alkyl group, an alkenyl group, a cycloalkyl group, a cycloalkenyl group, an aralkyl group, an alkoxy group, an alkenyloxy group, a cycloalkoxy group, a cycloalkenyloxy group, an aryloxy group, an aralkyloxy group, or a silyl group; R^{a5} represents a hydrogen atom or an alkyl group;
wherein the molecular chain consists of the poly-silane chain or the oligo-silane chain.

2. The silicon-containing polymer according to claim 1, wherein the molecular chain is linear.

3. The silicon-containing polymer according to any one of claims 1 or 2, wherein the number of moles of a group represented by the formula (1) is 0.05 mol or more and 2.0 mol or less with respect to 1 mol of silicon atom in the silicon-containing polymer.

4. The silicon-containing polymer according to claim 3, wherein the number of moles of a group represented by the formula (1) is 0.2 mol or more and 1.0 mol or less with respect to 1 mol of silicon atom in the silicon-containing polymer.

5. The silicon-containing polymer according to any one of claims 1 to 4, wherein the R¹ is an alkylene group having 2 or more and 6 or less carbon atoms.

6. A film-forming composition, **characterized in that** the composition contains the silicon-containing polymer (A) according to any one of claims 1 to 5 and a solvent (S).

7. A method for supporting a metal compound on a surface of an object to be treated,
**characterized in that** the method:
forming a coated film by applying the film-forming composition according to claim 6 onto the surface of the object to be treated,
drying the coated film to obtain a coating film comprising the silicon-containing polymer (A), and
contacting the coating film with a metal compound comprising an elemental metal.

8. The method for supporting a metal compound on a surface of an object to be treated according to claim 7, the method comprising contacting the coating film with a liquid comprising the metal compound.

9. An article comprising a coating film on a surface thereof,
**characterized in that** the coating film comprises the silicon-containing polymer (A) according to any one of claims 1 to 5, and
the coating film supports a metal compound comprising an elemental metal.

10. A method for producing a polysilane,
wherein the method comprising homo-polymerizing a cyano group-containing halosilane compound represented by a following formula (1a) in the presence of metallic magnesium, or copolymerizing the cyano group-containing halosilane compound and a halosilane compound other than the cyano group-containing halosilane compound in the presence of metallic magnesium,
**characterized in that** the polysilane comprises one or more groups represented by a following formula (1) bound to a silicon atom,
the formula (1) is represented by the following formula:
-R¹-CN • • • (1),
wherein in the formula (1), R¹ is an alkylene group having 2 or more and 8 or less carbon atoms,
the polysilane comprises poly-silane chain or oligo-silane chain composed of at least one of units represented by the following formulae (A5) to (A7): 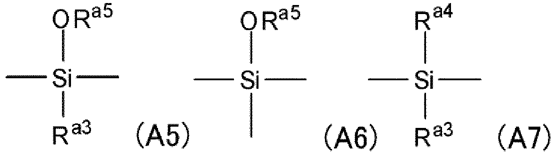 wherein, in the formulae, R^{a3} and R^{a4} each represent a hydrogen atom, a group represented by the formula (1), an alkyl group, an alkenyl group, a cycloalkyl group, a cycloalkenyl group, an aralkyl group, an alkoxy group, an alkenyloxy group, a cycloalkoxy group, a cycloalkenyloxy group, an aryloxy group, an aralkyloxy group, or a silyl group; R^{a5} represents a hydrogen atom or an alkyl group, and
the formula (1a) is represented by the following formula:
R²₍₂₋ₚ₎X₂Si-(R¹-CN)ₚ ··· (1a)
wherein in the formula (1a), X is a halogen atom, R¹ is the same as the R¹ in the formula (1), R² is an alkyl group, an alkenyl group, a cycloalkyl group, a cycloalkenyl group, or an aralkyl group each having 1 or more and 10 or less carbon atoms, and p is 1 or 2.

## Patentansprüche

1. Siliziumhaltiges Polymer, das eine Poly-Silan-Kette oder Oligo-Silan-Kette in einer Molekülkette umfasst,
**dadurch gekennzeichnet, dass** eine oder mehrere Gruppen, die durch die folgende Formel (1) dargestellt werden, an ein Siliziumatom in dem siliziumhaltigen Polymer gebunden sind;
wobei die Formel (1) dargestellt wird durch
-R¹-CN ... (1),
wobei in der Formel (1) R¹ eine Alkylengruppe mit 2 oder mehr und 8 oder weniger Kohlenstoffatomen ist, und
die Poly-Silan-Kette oder Oligo-Silan-Kette aus mindestens einer der durch die folgenden Formeln (A5) bis (A7) dargestellten Einheiten zusammengesetzt ist: 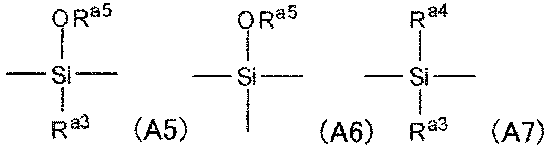
wobei R^{a3} und R^{a4} in den Formeln jeweils ein Wasserstoffatom, eine durch die Formel (1) dargestellte Gruppe, eine Alkylgruppe, eine Alkenylgruppe, eine Cycloalkylgruppe, eine Cycloalkenylgruppe, eine Aralkylgruppe, eine Alkoxygruppe, eine Alkenyloxygruppe, eine Cycloalkoxygruppe, eine Cycloalkenyloxygruppe, eine Aryloxygruppe, eine Aralkyloxygruppe oder eine Silylgruppe darstellen; R^{a5} ein Wasserstoffatom oder eine Alkylgruppe darstellt;
wobei die Molekülkette aus der Poly-Silan-Kette oder der Oligo-Silan-Kette besteht.

2. Siliziumhaltiges Polymer nach Anspruch 1, wobei die Molekülkette linear ist.

3. Siliziumhaltiges Polymer nach einem der Ansprüche 1 oder 2, wobei die Anzahl der Mole einer durch die Formel (1) dargestellten Gruppe 0,05 Mol oder mehr und 2,0 Mol oder weniger beträgt, bezogen auf 1 Mol Siliziumatome in dem siliziumhaltigen Polymer.

4. Siliziumhaltiges Polymer nach Anspruch 3, wobei die Anzahl der Mole einer durch die Formel (1) dargestellten Gruppe 0,2 mol oder mehr und 1,0 mol oder weniger beträgt, bezogen auf 1 mol Siliziumatome in dem siliziumhaltigen Polymer.

5. Siliziumhaltiges Polymer nach einem der Ansprüche 1 bis 4, wobei R¹ eine Alkylengruppe mit 2 oder mehr und 6 oder weniger Kohlenstoffatomen ist.

6. Filmbildende Zusammensetzung, **dadurch gekennzeichnet, dass** die Zusammensetzung das siliziumhaltige Polymer (A) nach einem der Ansprüche 1 bis 5 und ein Lösungsmittel (S) enthält.

7. Verfahren zum Aufbringen einer Metallverbindung auf eine Oberfläche eines zu behandelnden Objekts,
**dadurch gekennzeichnet, dass** das Verfahren:
Bilden eines beschichteten Films durch Auftragen der filmbildenden Zusammensetzung nach Anspruch 6 auf die Oberfläche des zu behandelnden Objekts,
Trocknen des beschichteten Films, um einen Beschichtungsfilm zu erhalten, der das siliziumhaltige Polymer (A) enthält, und
Inkontaktbringen des Beschichtungsfilms mit einer Metallverbindung, die ein elementares Metall enthält.

8. Verfahren zum Aufbringen einer Metallverbindung auf eine Oberfläche eines zu behandelnden Objekts nach Anspruch 7, wobei das Verfahren das Inkontaktbringen des Beschichtungsfilms mit einer Flüssigkeit umfasst, welche die Metallverbindung umfasst.

9. Gegenstand, der einen Beschichtungsfilm auf seiner Oberfläche aufweist,
**dadurch gekennzeichnet, dass** der Beschichtungsfilm das siliziumhaltige Polymer (A) nach einem der Ansprüche 1 bis 5 umfasst, und
der Beschichtungsfilm eine Metallverbindung trägt, die ein elementares Metall umfasst.

10. Verfahren zur Herstellung eines Polysilans,
wobei das Verfahren eine Homopolymerisation einer Cyanogruppen-haltigen Halogensilan-Verbindung der folgenden Formel (1a) in Gegenwart von metallischem Magnesium oder eine Copolymerisation der Cyanogruppen-haltigen Halogensilan-Verbindung und einer anderen Halogensilan-Verbindung als der Cyanogruppen-haltigen Halogensilan-Verbindung in Gegenwart von metallischem Magnesium umfasst,
**dadurch gekennzeichnet, dass** das Polysilan eine oder mehrere Gruppen umfasst, die durch die folgende Formel (1) dargestellt werden und an ein Siliziumatom gebunden sind,
wobei die Formel (1) durch die folgende Formel dargestellt wird:
-R¹-CN ... (1),
wobei in der Formel (1) R¹ eine Alkylengruppe ist, die 2 oder mehr und 8 oder weniger Kohlenstoffatome enthält,
das Polysilan eine Poly-Silan-Kette oder eine Oligo-Silan-Kette umfasst, die aus mindestens einer der durch die folgenden Formeln (A5) bis (A7) dargestellten Einheiten zusammengesetzt ist: 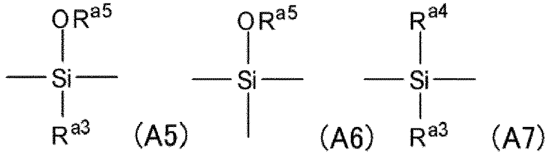
wobei R^{a3} und R^{a4} in den Formeln jeweils ein Wasserstoffatom, eine durch die Formel (1) dargestellte Gruppe, eine Alkylgruppe, eine Alkenylgruppe, eine Cycloalkylgruppe, eine Cycloalkenylgruppe, eine Aralkylgruppe, eine Alkoxygruppe, eine Alkenyloxygruppe, eine Cycloalkoxygruppe, eine Cycloalkenyloxygruppe, eine Aryloxygruppe, eine Aralkyloxygruppe oder eine Silylgruppe darstellen; R^{a5} ein Wasserstoffatom oder eine Alkylgruppe darstellt; und
die Formel (1a) durch die folgende Formel dargestellt wird:
R²₍₂₋ₚ₎X₂Si-(R¹-CN)ₚ ··· (1a)
wobei in der Formel (1a) X ein Halogenatom ist, R¹ das gleiche wie R¹ in der Formel (1) ist, R² eine Alkylgruppe, eine Alkenylgruppe, eine Cycloalkylgruppe, eine Cycloalkenylgruppe oder eine Aralkylgruppe ist, die jeweils 1 oder mehr und 10 oder weniger Kohlenstoffatome aufweisen, und p 1 oder 2 ist.

## Revendications

1. Polymère contenant du silicium, comprenant une chaîne de poly-silane ou une chaîne d'oligo-silane dans une chaîne moléculaire,
**caractérisé en ce qu'**un ou plusieurs groupes représentés par une formule (1) suivante sont liés à un atome de silicium dans le polymère contenant du silicium ;
dans lequel la formule (1) est représentée par
-R¹-CN (1)
dans lequel, dans la formule (1), R¹ est un groupe alkylène ayant 2 atomes de carbone ou plus et 8 atomes de carbone ou moins, et
la chaîne de poly-silane ou la chaîne d'oligo-silane est composée d'au moins un des motifs représentés par les formules (A5) à (A7) suivantes : 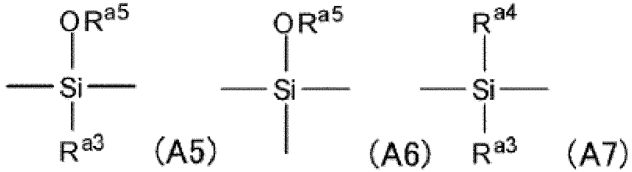
dans lequel, dans les formules, R^{a3} et R^{a4} représentent chacun un atome d'hydrogène, un groupe représenté par la formule (1), un groupe alkyle, un groupe alcényle, un groupe cycloalkyle, un groupe cycloalcényle, un groupe aralkyle, un groupe alcoxy, un groupe alcényloxy, un groupe cycloalcoxy, un groupe cycloalcényloxy, un groupe aryloxy, un groupe aralkyloxy, ou un groupe silyle ; R^{a5} représente un atome d'hydrogène ou un groupe alkyle ;
dans lequel la chaîne moléculaire est constituée de la chaîne de poly-silane ou de la chaîne d'oligo-silane.

2. Polymère contenant du silicium selon la revendication 1, dans lequel la chaîne moléculaire est linéaire.

3. Polymère contenant du silicium selon l'une quelconque des revendications 1 ou 2, dans lequel le nombre de moles d'un groupe représenté par la formule (1) est de 0,05 mole ou plus et de 2,0 moles ou moins par rapport à 1 mole d'atome de silicium dans le polymère contenant du silicium.

4. Polymère contenant du silicium selon la revendication 3, dans lequel le nombre de moles d'un groupe représenté par la formule (1) est de 0,2 mole ou plus et de 1,0 mole ou moins par rapport à 1 mole d'atome de silicium dans le polymère contenant du silicium.

5. Polymère contenant du silicium selon l'une quelconque des revendications 1 à 4, dans lequel le R¹ est un groupe alkylène ayant 2 atomes de carbone ou plus et 6 atomes de carbone ou moins.

6. Composition filmogène, **caractérisée en ce que** la composition contient le polymère contenant du silicium (A) selon l'une quelconque des revendications 1 à 5 et un solvant (S).

7. Procédé pour supporter un composé métallique sur une surface d'un objet à traiter, **caractérisé en ce que** le procédé comprend :
la formation d'un film revêtu par l'application de la composition filmogène selon la revendication 6 sur la surface de l'objet à traiter,
le séchage du film revêtu pour obtenir un film de revêtement comprenant le polymère contenant du silicium (A), et
la mise en contact du film de revêtement avec un composé métallique comprenant un métal élémentaire.

8. Procédé pour supporter un composé métallique sur une surface d'un objet à traiter selon la revendication 7, le procédé comprenant la mise en contact du film de revêtement avec un liquide comprenant le composé métallique.

9. Article comprenant un film de revêtement sur une surface de celui-ci,
**caractérisé en ce que** le film de revêtement comprend le polymère contenant du silicium (A) selon l'une quelconque des revendications 1 à 5, et
le film de revêtement supporte un composé métallique comprenant un métal élémentaire.

10. Procédé de production d'un polysilane,
dans lequel le procédé comprend l'homopolymérisation d'un composé d'halosilane contenant un groupe cyano représenté par une formule (1a) suivante en présence de magnésium métallique, ou la copolymérisation du composé d'halosilane contenant un groupe cyano et d'un composé d'halosilane autre que le composé d'halosilane contenant un groupe cyano en présence de magnésium métallique,
**caractérisé en ce que** le polysilane comprend un ou plusieurs groupes représentés par une formule (1) suivante liés à un atome de silicium,
la formule (1) est représentée par la formule suivante :
-R¹-CN (1)
dans lequel, dans la formule (1), R¹ est un groupe alkylène ayant 2 atomes de carbone ou plus et 8 atomes de carbone ou moins,
le polysilane comprend une chaîne de poly-silane ou une chaîne d'oligo-silane composée d'au moins un des motifs représentés par les formules (A5) à (A7) suivantes : 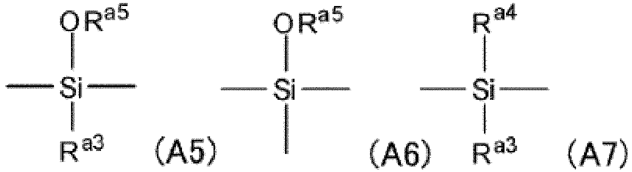
dans lequel, dans les formules, R^{a3} et R^{a4} représentent chacun un atome d'hydrogène, un groupe représenté par la formule (1), un groupe alkyle, un groupe alcényle, un groupe cycloalkyle, un groupe cycloalcényle, un groupe aralkyle, un groupe alcoxy, un groupe alcényloxy, un groupe cycloalcoxy, un groupe cycloalcényloxy, un groupe aryloxy, un groupe aralkyloxy, ou un groupe silyle ; R^{a5} représente un atome d'hydrogène ou un groupe alkyle, et
la formule (1a) est représentée par la formule suivante :
R²₍₂₋ₚ₎X₂Si-(R¹-CN)ₚ (1a)
dans lequel, dans la formule (1a), X est un atome d'halogène, R¹ est identique à R¹ dans la formule (1), R² est un groupe alkyle, un groupe alcényle, un groupe cycloalkyle, un groupe cycloalcényle, ou un groupe aralkyle ayant chacun 1 atome de carbone ou plus et 10 atomes de carbone ou moins, et p est 1 ou 2.
